# EUROPEAN PATENT APPLICATION

(11) **EP 4 484 074 A1**
(43) Date of publication of application: **01.01.2025**
(21) Application number: 24172149.7
(22) Date of filing: 24.04.2024
(51) Int. Cl.: B25J 5/02, B25J 9/16, B25J 11/00, B05B 13/04

(54) **PAINTING ROBOT**

(30) Priority: 27.06.2023 JP 2023105031
(71) Applicant: KAWASAKI JUKOGYO KABUSHIKI KAISHA, Kobe-shi, Hyogo 650-8670 (JP)
(72) Inventor: DEMURA, Nobuhiro, Kobe-shi, 650-8670 (JP); TANIUCHI, Ryo, Kobe-shi, 650-8670 (JP)
(74) Representative: Müller-Boré & Partner Patentanwälte PartG mbB

(57) **Abstract**

A painting robot (10) according to this disclosure includes a vertical multi-joint robot arm (10a); a linear shaft (30) configured to linearly move the robot arm (10a) along a mount surface (2) for the robot arm (10a); and a controller (15) configured to interlock the joint of the robot arm (10a) and the linear shaft (30) with each other in an operation of painting a workpiece (200).

## Description

### BACKGROUND OF THE INVENTION

### Field of the Invention

The present disclosure relates to a painting robot.

### Description of the Background Art

Painting robots for painting workpieces are disclosed in the art. Japanese Patent Laid-Open Publication No. JP H04-111787 discloses a painting robot including a horizontal arm configured to move a spray gun in a horizontal direction, and a vertical arm that arm configured to move the horizontal arm in a vertical direction. The painting robot disclosed in Japanese Patent Laid-Open Publication No. JP H04-111787 paints an upper surface of a car body while moving the spray gun in the horizontal direction by using the horizontal arm. The horizontal arm is moved upward/downward by the vertical arm to adjust a distance between the upper surface of the car body and the spray gun.

However, because the spray gun can be moved in only two directions, which are the horizontal and vertical directions in the painting robot disclosed in Japanese Patent Laid-Open Publication No. JP H04-111787, a degree of movement freedom of the spray gun is low. For this reason, a coating robot capable of improving the degree of movement freedom of a painter such as a spray gun is desired.

### SUMMARY OF THE INVENTION

The present disclosure is intended to solve the above problem, and one object of the present disclosure is to provide a coating robot capable of improving a degree of movement freedom of a painter.

A painting robot according to one aspect of the present disclosure includes a vertical multi-joint robot arm having a distal end part to which a painter is attached, and including a joint; a linear shaft connected to a proximal end part of the robot arm, and configured to linearly move the robot arm along a mount surface to which the robot arm is mounted; and a controller configured to interlock the joint of the robot arm and the linear shaft with each other in an operation of painting a workpiece.

In the painting robot according to the one aspect of the present disclosure, as discussed above, the controller is configured to interlock the joint of the vertical multi-joint robot arm and the linear shaft with each other in an operation of painting a workpiece. Accordingly, the vertical multi-joint robot can move the painter, in addition to horizontal and vertical directions, in a various directions intersecting the horizontal and vertical directions, while a position of the linear shaft can be changed in a direction extending along the mount surface to which the robot arm is mounted. Consequently, it is possible to improve a degree of movement freedom of the painter.

According to the present disclosure, the painting robot can improve a degree of movement freedom of a painter.

### BRIEF DESCRIPTION OF THE DRAWINGS

FIG. 1 is a view showing a painting robot system according to a first embodiment as viewed from a top side.
FIG. 2 is a view showing a painting robot according to the first embodiment as viewed from a lateral side.
FIG. 3 is a block diagram showing the painting robot system according to the first embodiment.
FIG. 4 is a view showing the painting robot system according to the first embodiment as viewed from a lateral side.
FIG. 5 is a view showing a movable range of the painting robot according to the first embodiment.
FIG. 6 is a view showing a painting robot according to a second embodiment as viewed from a lateral side.
FIG. 7 is a view showing a painting robot according to a third embodiment as viewed from a lateral side.
FIG. 8 is a view showing a painting robot according to a first modified embodiment as viewed from a lateral side.
FIG. 9 is a view showing a painting robot according to a second modified embodiment as viewed from a lateral side.
FIG. 10 is a view showing a painting robot according to a third modified embodiment as viewed from a lateral side.
FIG. 11 is a view showing a painting robot according to a fourth modified embodiment as viewed from a lateral side.
FIG. 12 is a view showing a painting robot according to a fifth modified embodiment as viewed from a lateral side.

### DESCRIPTION OF THE PREFERRED EMBODIMENT

The following description will describe one embodiment embodying the present disclosure with reference to the drawings.

### First Embodiment

### (Painting Robot System)

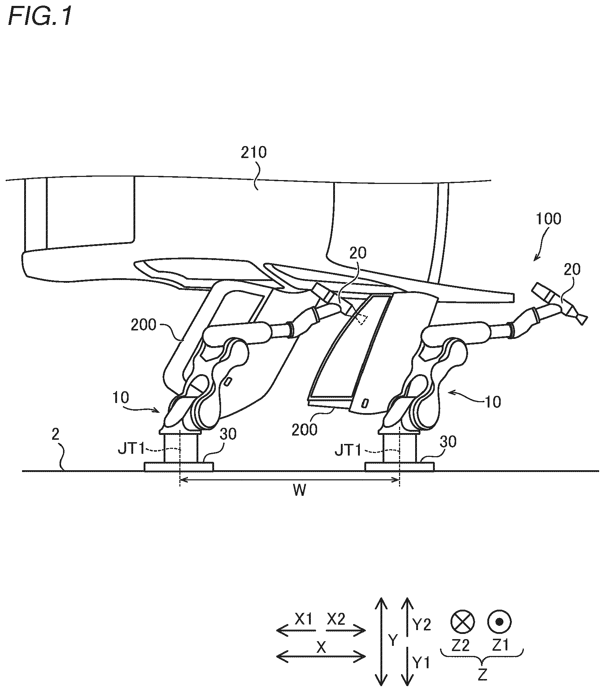

The following description describes a configuration of a painting robot system 100. As shown in FIG. 1, the painting robot system 100 paints workpieces 200. In this specification, the upward/downward direction is defined as a Z direction. An upper side is defined a Z1 side, and a lower side is defined as a Z2 side. A direction orthogonal to the Z direction is defined as an X direction. One side in the X direction is defined as an X1 side, and another side is defined as an X2 side. A direction orthogonal to the Z direction and the X direction is defined as a Y direction. One side in the Y direction is defined as an Y1 side, and another side is defined as an Y2 side. The X-direction is an example of a predetermined direction in the claims.

As shown in FIG. 1, the painting robot system 100 includes a plurality of painting robots 10. The plurality of painting robots 10 are arranged adjacent to each other, and configured to paint the workpieces 200. In FIG. 1, two painting robots 10 are arranged adjacent to each other in the X direction. The two painting robots 10 are mounted on a wall 2 extending in the Z direction perpendicular to a floor 1. The workpieces 200, for example, are doors of a car 210. The painting robot 10 paints one or both of X1-side and X2-side surfaces of each workpiece 200. The workpieces 200 are conveyed in the X direction by a conveyor, for example. During an operation of painting the workpiece 200 by using the painting robot 10, the workpieces 200 are at rest. Alternatively, the painting robot 10 can paint the workpiece 200 moving. The workpieces 200 are aligned in the X direction. In an exemplary arrangement shown in FIG. 1, two doors of one car 210 are aligned in the X direction as the workpieces 200.

### (Painting Robot)

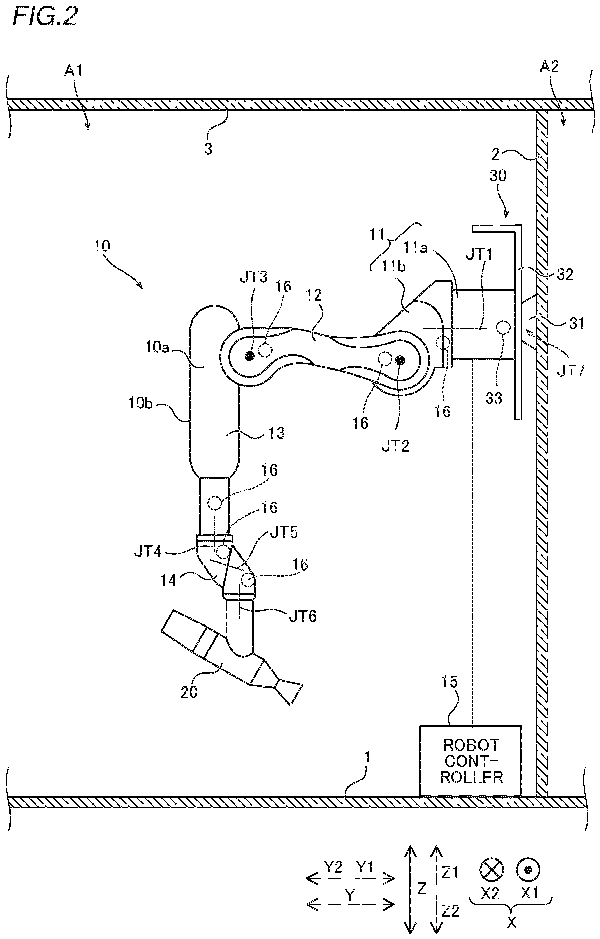

The following description describes a configuration of the painting robot 10 according to a first embodiment. The two painting robots 10 have the same configuration, and the following description describes the configuration of one of the painting robots 10. As shown in FIG. 2, the painting robot 10 includes a robot arm 10a, a linear shaft 30, joint drivers 16, a linear-shaft driver 33, a robot controller 15. The robot arm 10a is a vertical multi-joint robot arm having a distal end part to which a painter 20 is attached, and including joints. Specifically, the robot arm 10a is a 6-axis vertical multi-joint robot arm 10a including six joints, which are JT1 joint, JT2 joint, JT3 joint, JT4 joint, JT5 joint and JT6 joint. That is, the painting robot 10 includes a 7-axis vertical multi-joint painting robot 10 including the robot arm 10a including the six joints, and the linear shaft 30 as a JT7 joint.

The following description describes a configuration of the robot arm 10a. The robot arm 10a includes a base 11, a proximal-end arm 12, a distal-end arm 13, and a wrist 14. The painter 20 is connected to a distal end part of the painting robot 10.

The following description describes a connection between the base 11, the proximal-end arm 12, the distal-end arm 13 and the wrist 14. The base 11 includes a first part 11a and a second part 11b. The first part 11a is attached to the linear shaft 30. The first part 11a and the second part 11b are connected to each other by the JT1 joint. In an exemplary arrangement shown in FIG. 2, the JT1 joint is configured to rotate about an axis extending in the Y direction. The second part 11b of the base 11 and a proximal end part of the proximal-end arm 12 are connected to each other by the JT2 joint. The JT2 joint is configured to rotate about an axis extending in a direction perpendicular to the axis of the JT1 joint. A distal end part of the proximal-end arm 12 and the proximal end part of the distal-end arm 13 are connected to each other by the JT3 joint. The JT3 joint is configured to rotate about an axis parallel to the axis of the JT2 joint. A distal end part of the distal-end arm 13 and a proximal end part of the wrist 14 are connected to each other by the JT4 joint. The JT4 joint is configured to rotate about an axis extending in a direction perpendicular to the axis of the JT3 joint. A distal end part of the wrist 14 and the painter 20 are connected to each other by the JT6 joint. The JT6 joint is configured to rotate about an axis extending in a direction perpendicular to the axis of the JT3 joint. The JT4 joint and the JT6 joint are connected to each other by the JT5 joint. The JT5 joint is configured to rotate about an axis extending in a direction perpendicular to the axis of the JT3 joint. The axis of the JT4 joint and the axis of the JT5 joint intersect each other. The axis of the JT5 joint and the axis of the JT6 joint intersect each other. The axis of the JT1 joint is an example of a predetermined axis.

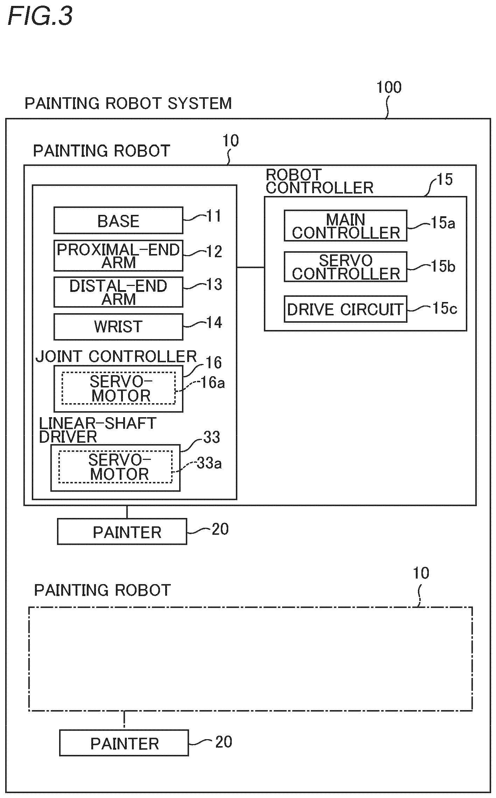

The following description describes a configuration of the linear shaft 30 as a JT7 joint. In the first embodiment, the linear shaft 30 is connected to the proximal end part of the robot arm 10a, and is configured to linearly move the robot arm 10a along the wall 2 as a mount surface to which the robot arm 10a is mounted in the Z direction. In other words, the linear shaft 30 is configured to move the robot arm 10a in the Z direction perpendicular to the X direction in which the plurality of painting robots 10 are aligned. The linear shaft 30 includes a base 31, a moving part 32, and a linear-shaft driver 33. The base 31 is mounted to the wall 2. The base 31 is fixed to the wall 2, and does not move. The moving part 32 can move in the Z direction relative to the base 31. The moving part 32 is a plate element having an L shape as viewed in the X direction, for example. A Y1-side surface of the moving part 32 is movably attached to the base 31. The first part 11a of the base 11 is attached to a Y2-side surface of the moving part 32. The robot arm 10a is fixed to the moving part 32, and does not move relative to the moving part 32. A movable amount of the moving part 32 is specified to a range that allows the painter 20 to reach the floor 1 and the ceiling 3, for example. The linear shaft 30 is a linear actuator, for example. In addition, the linear-shaft driver 33 includes a servomotor 33a shown in FIG. 3, for example, and a rotating shaft of the servomotor 33a is connected to a ball screw. The ball screw threadedly engages a nut arranged in the moving part 32 so that the moving part 32 can linearly move when the ball screw rotates. The wall 2 is an example of a mount surface. The servomotor 33a is an example of an electric motor.

The following description describes configurations of the joint drivers 16 and the linear-shaft driver 33. In the first embodiment, the joint driver 16 is configured to drive the joints of the robot arm 10a, as shown in FIG. 2. The joint drivers 16 are provided to the JT1 joint to the JT6 joint. The linear-shaft driver 33 is configured to drive the linear shaft 30. Each of the joint drivers 16 and the linear-shaft driver 33 includes a servomotor 16a or a servomotor 33a shown in FIG. 3. Specifically, each of the joint driver 16 and the linear-shaft driver 33 includes an encoder and a reduction gear in addition to the servomotor 16a or the servomotor 33a.

In the first embodiment, the joint driver 16 is accommodated in an arm housing 10b of the robot arm 10a as an explosion-proof part. The linear-shaft driver 33, which is configured to drive the linear shaft 30, is also accommodated in the arm housing 10b of the robot arm 10a, which serves as the explosion-proof part. The arm housing 10b is a tubular member that forms exterior surfaces of the base 11, the proximal-end arm 12, the distal-end arm 13 and the wrist 14 of the robot arm 10a, and can accommodate wires, and the like. Also, air is supplied to an interior of the arm housing 10b as the explosion-proof part to apply an internal pressure so as to prevent surrounding gases from entering the interior of the arm housing 10b.

The following description describes the robot controller 15. As shown in FIG. 2, the wall 2 separates an explosion-proof area A1 in which explosion proof is required from a non-explosion-proof area A2 in which explosion proof is not required. The robot controller 15 can be placed in the explosion-proof area A1 in a case in which the robot controller 15 is explosionproof. Contrary to this, the robot controller 15 is placed in the non-explosion-proof area A2 in a case in which the robot controller 15 is not explosionproof. As shown in FIG. 3, the robot controller 15 includes a main controller 15a, a servo controller 15b, and a drive circuit 15c set. The main controller 15a and the servo controller 15b include, for example, CPUs (Central Processing Units). The main controller 15a is configured to control the joint drivers 16 of the JT1 joint to the JT6 joint, and the linear-shaft driver 33 of the JT7 joint. That is, in the first embodiment, the robot controller 15 is a common robot controller 15 for the JT1 joint to the JT6 joint, and the JT7 joint. In other words, the robot controller 15 is configured to produce command values corresponding to the JT1 joint to the JT7 joint based on inverse kinematics that calculates displacements of the JT1 joint to the JT7 joint in accordance with a target position and an orientation of the painting robot 10. Accordingly, the JT7 joint is controlled by the robot controller 15 as a part of the painting robot 10 similar to the JT1 joint to the JT6 joint. In a case in which a standard specification of the robot controller 15 is specified to control a 6-axis vertical multi-joint robot, the JT7 joint is controlled as an external axis different from the vertical multi-joint robot by the robot controller 15. As a result, in the first embodiment, the robot controller 15 is configured to interlock the joints of the robot arm 10a and the linear shaft 30 with each other in an operation of painting the workpiece 200. The robot controller 15 is an example of a controller.

In the first embodiment, the robot controller 15 is configured to move the painter 20 at a constant speed relative to the workpiece 200 by interlocking the JT1 joint to the JT6 joint of the robot arm 10a and the linear shaft 30 with each other. For example, the robot controller 15 can move the painter 20 at a constant speed relative to the workpiece 200 in the Z direction. In other words, the robot controller 15 is configured to produce the command values corresponding to the JT1 joint to the JT7 joint based on the position and the orientation of the painting robot 10 at each teaching point taught by an operator by using a teaching pendant. The robot controller 15 is configured to produce the command values that direct the painter 20 to move at a constant speed between teaching points.

The servo controller 15b controls electric power supplied to the joint drivers 16 and the linear-shaft driver 33 based on commands from the main controller 15a. The drive circuits 15c supply driving power to the joint drivers 16 and the linear-shaft driver 33. The drive circuits 15c are provided to the JT1 joint to the JT7 joint. Alternatively, one common drive circuit 15c can be provided for the JT1 joint to the JT7 joint.

### (Layout of Painting Robot System)

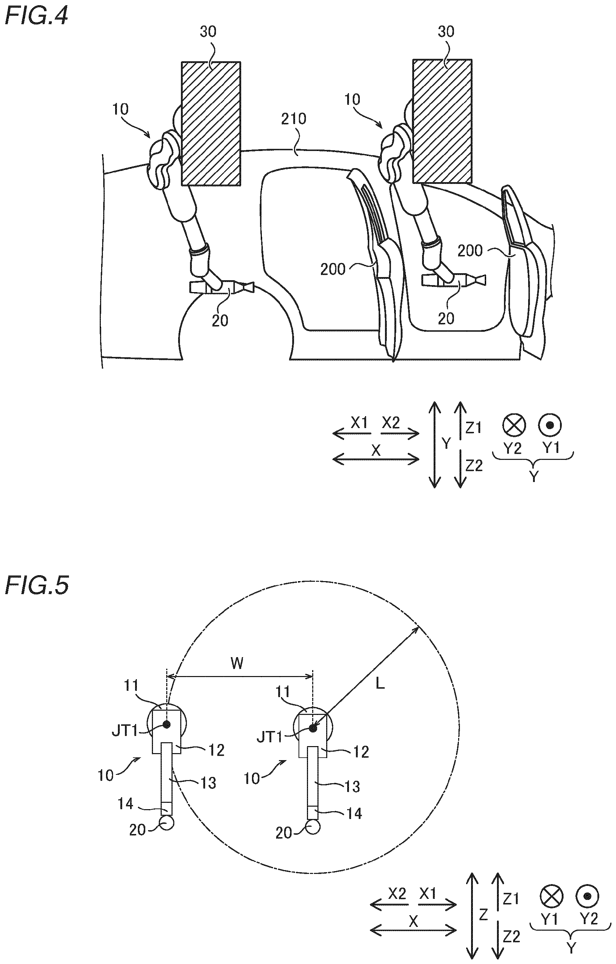

The following description describes a layout of the painting robot system 100. In the first embodiment, as shown in FIG. 4, the plurality of painting robots 10 are arranged between workpieces 200 in the operation of painting the workpieces 200. The plurality of painting robots 10 paint the workpieces 200. For example, in a case in which the painting robot 10 paints a Z1 side of the workpiece 200, the robot arm 10a is moved to the Z1 side by the linear shaft 30. Also, in a case in which the painting robot 10 paints a Z2 side of the workpiece 200, the robot arm 10a is moved to the Z2 side by the linear shaft 30. If the painting robot 10 becomes too close to the workpiece 200, for example, the linear shaft 30 moves the robot arm 10a toward the Z1 side so as to prevent interference of the robot arm 10a with the workpiece 200.

The following description describes an interval between the painting robots 10. In the first embodiment, as shown in FIG. 5, an interval W between the painting robots 10 arranged adjacent to each other is not greater than a distance L between the axis of the JT1 joint and an end of a movable range of the painting robot 10. The interval W between the painting robots 10 arranged adjacent to each other refers to the interval W in the X direction between the axes of the JT1 joints of the painting robots 10. The end of the movable range is the farthest end which an intersection between the JT4 joint axis and the JT5 joint axis can reach in a direction away from the JT1 joint axis, for example. In an exemplary layout shown in FIG. 5, the interval W is equal to the distance L.

### Advantages of First Embodiment

The robot controller 15 is configured to interlock the JT1 joint to the JT6 joint, and the linear shaft 30 of the vertical multi-joint robot arm 10a with each other in an operation of painting the workpiece 200. Accordingly, the vertical multi-joint robot arm 10a can move the painter 20, in addition to horizontal and vertical directions, in a various directions intersecting the horizontal and vertical directions, while a position of the linear shaft 30 can be changed in a direction extending along the mount surface to which the robot arm 10a is mounted. Consequently, it is possible to improve a degree of movement freedom of the painter 20. As a result, it is possible to precisely adjust the position of the painter 20. Also, because the position of the robot arm 10a itself is moved by the linear shaft 30, it is possible to prevent interference of the robot arm 10a and the workpiece 200 or surrounding equipment. For example, when the workpiece 200 conveyed by a conveyor approaches the robot arm 10a, the robot arm 10a is moved by the linear shaft 30 so that the robot arm 10a and the workpiece 200 do not interfere with each other based on a shape of the workpiece 200. Also, because the robot arm 10a is moved by the linear shaft 30, an operating range and a painting range of the painting robot 10 can be increased. Also, because the robot arm 10a is be moved by the linear shaft 30, the painter 20 and the robot arm 10a can be moved to positions in proximity to a paint-filling position at which the painter 20 is filled with paint, a cleaning position at which the painter 20 is cleaned, and a paint disposal position at which the robot disposes of waste paint.

The robot controller 15 is configured to move the painter 20 at a constant speed relative to the workpiece 200 by interlocking the JT1 joint to the JT6 joint of the robot arm 10a and the linear shaft 30 with each other. Because unevenness of a thickness of the paint can be prevented from occurring due to moving speed change of the painter 20, the thickness of the paint on the workpiece 200 can be kept constant.

The robot controller 15 is commonly used for the JT1 joint to the JT6 joint, and the linear shaft 30. Consequently, it is possible to prevent the configuration of the painting robot 10 from becoming complicated as compared with a case in which the controllers are separately provided to a set of the JT1 joint to the JT6 joint of the robot arm 10a, and to the linear shaft 30.

The painting robot 10 includes the joint drivers 16 configured to drive the JT1 joint to the JT6 joint of the robot arm 10a, and the linear-shaft driver 33 configured to drive the linear shaft 30. The robot arm 10a includes the arm housing 10b as the explosion-proof part. The joint drivers 16 and the linear-shaft driver 33 are accommodated in the arm housing 10b. Because the joint drivers 16 and the linear-shaft driver 33 are accommodated in the arm housing 10b as the common explosion-proof part, it is possible to prevent the configuration of the painting robot 10 from becoming complicated dissimilar to a case in which the joint drivers 16 and the linear-shaft driver 33 are separately accommodated in separate explosion-proof parts.

The painting robot 10 includes the linear-shaft driver 33 configured to drive the linear shaft 30. The linear-shaft driver 33 includes the servomotor 33a. Accordingly, because a moving amount of the linear shaft 30 can be sequentially changed by the servomotor 33a, the position of the painter 20 can be more precisely adjusted.

The linear shaft 30 is arranged on the wall 2 perpendicular to the floor 1. Accordingly, it is possible to increase a painting area of the workpiece 200 in the vertical direction.

The painting robot 10 includes a 7-axis vertical multi-joint painting robot 10 including the robot arm 10a including the six JT1 joint to JT6 joint, and the linear shaft 30. Accordingly, it is possible to precisely adjust the position of the painter 20 in the 7-axis vertical multi-joint painting robot 10.

The plurality of painting robots 10 are aligned in the X direction, and the linear shafts 30 move the robot arms 10a in the Z direction perpendicular to the X direction. Accordingly, because the distance W between the robot arms 10a does not become small dissimilar to a case in which the linear shafts 30 move the robot arms 10a in the X direction, it is possible to prevent interference of the robot arms 10a with each other.

The plurality of workpieces 200 are aligned in the X direction, and the plurality of painting robots 10 are aligned in the X direction. The proximal end part of the robot arm 10a rotates about the axis of the JT1 joint. The interval W between the painting robots 10 arranged adjacent to each other is not greater than the distance L between the axis of the JT1 joint and the end of the movable range of the painting robot 10. Because the distance W between the painting robots 10 is relatively small, the painting robots 10 can be arranged close to each other.

### Second Embodiment

The following description describes a configuration of a painting robot 110 according to a second embodiment. In the painting robot 110 according to the second embodiment, the linear-shaft driver 33 is arranged in the non-explosion-proof area A2.

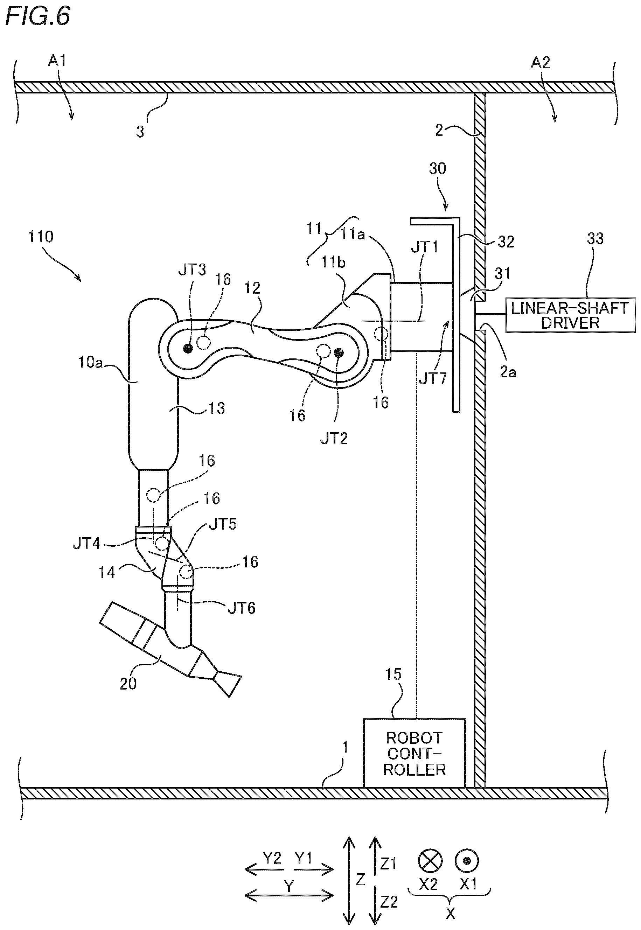

In the second embodiment, the linear shaft 30 is arranged on the wall 2 as shown in FIG. 6. The wall 2 separates the explosion-proof area A1 in which explosion proof is required from the non-explosion-proof area A2 in which explosion proof is not required. The robot arm 10a, and the base 31 and the moving part 32 of the linear shaft 30 are arranged in the explosion-proof area A1. The linear-shaft driver 33 of the linear shaft 30 is arranged in the non-explosion-proof area A2. Specifically, a hole 2a is formed in the wall 2, and driving force of the linear-shaft driver 33 is transmitted to the moving part 32 through the hole 2a. The joint drivers 16, which are configured to drive the JT1 joint to the JT6 joint of the robot arm 10a, are arranged in the arm housing 10b. The other configuration of the second embodiment is similar to the first embodiment.

### Advantages of Second Embodiment

The painting robot 110 includes the joint drivers 16 configured to drive the JT1 joint to the JT6 joint of the robot arm 10a, and the linear-shaft driver 33 configured to drive the linear shaft 30. The robot arm 10a includes the arm housing 10b as the explosion-proof part, and the joint drivers 16 are accommodated in the arm housing 10b. The linear shaft 30 is mounted on the wall 2 that separates the explosion-proof area A1 in which explosion proof is required from the non-explosion area A2 in which explosion proof is required, and the linear-shaft driver 33 is arranged in the non-explosion area A2. Accordingly, because the explosion-proof part is not necessarily separately provided for the linear-shaft driver 33, it is possible to prevent the configuration of the painting robot 110 from becoming complicated. The other advantages of the second embodiment are similar to the first embodiment.

### Third Embodiment

The following description describes a configuration of a painting robot 120 according to a third embodiment. In the painting robot 120 according to the third embodiment, a spring 121 is arranged between the ceiling surface 3 and the linear shaft 30.

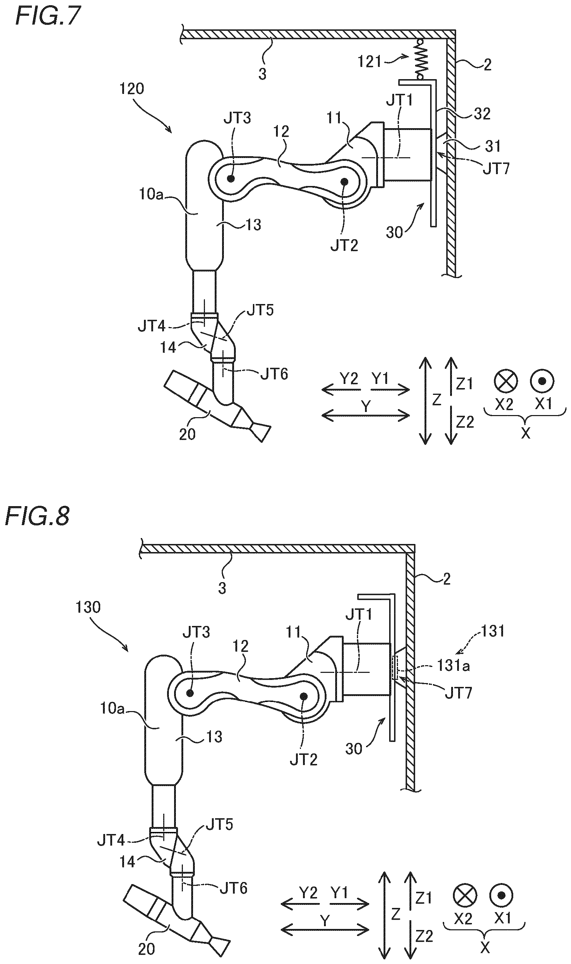

In the second embodiment, the linear shaft 30 is arranged on the wall 3 as shown in FIG. 7. The spring 121 is connected between the ceiling surface 3 and the linear shaft 30 so as to cancel gravity applied to the linear shaft 30. Specifically, the spring 121 is connected to the ceiling surface 3 and an upper end part of the moving part 32 of the linear shaft 30. The spring 121 extends in the Z direction. The spring 121 is a coil spring, a gas spring, or the like. The gas spring includes a tube, a rod inserted into the tube, and gas or oil held between the tube and the rod. The rod can be moved by pressure of the gas. The moving part 32 of the linear shaft 30 can be suspended by the spring 121 even when driving force of the linear-shaft driver 33 is not applied. The other configuration of the third embodiment is similar to the first embodiment.

### Advantages of Third Embodiment

The linear shaft 30 is arranged on the wall 2, and the painting robot 120 includes the spring 121, which is connected between the ceiling surface 3 and the linear shaft 30 so as to cancel the gravity applied the linear shaft 30. Because the linear shaft 30 can be suspended, it is possible to reduce a force required to move the linear shaft 30 upward/downward. As a result, it is possible to reduce electric power for driving the linear-shaft driver 33, which moves the linear shaft 30 upward/downward. The other advantages of the third embodiment are similar to the first embodiment.

### Modified Embodiments

Note that the embodiment disclosed this time must be considered as illustrative in all points and not restrictive. The scope of the present disclosure is not shown by the above description of the embodiments but by the scope of claims for patent, and all modifications or modified examples within the meaning and scope equivalent to the scope of claims for patent are further included.

While the example in which the robot controller 15 is configured to move the painter 20 at a constant speed relative to the workpiece 200 by interlocking the JT1 joint to the JT6 joint of the robot arm 10a and the linear shaft 30 with each other has been shown in the aforementioned first, second, and third embodiments has been shown in the aforementioned embodiment, the present disclosure is not limited to this. For example, alternatively, the robot controller 15 can move the painter 20 while maintaining a certain distance between the painter and the workpiece 200.

While the example in which the robot controller 15 is commonly used for the JT1 joint to the JT6 joint of the robot arm 10a, and the linear shaft 30 has been shown in the aforementioned first, second, and third embodiments, the present disclosure is not limited to this. For example, alternatively, controllers can be separately provided to the JT1 joint to the JT6 joint of the robot arm 10a, and to the linear shaft 30.

While the example in which the linear-shaft driver 33 is accommodated in the arm housing 10b has been shown in the aforementioned first and third embodiments, and the example in which the linear-shaft driver 33 is arranged in the non-explosion-proof area A2 in the aforementioned second embodiment, the present disclosure is not limited to this. For example, alternatively, the linear-shaft driver 33 can be arranged in an explosion-proof container in the explosion-proof area A1.

While the example in which the linear-shaft driver 33 includes the servomotor 33a has been shown in the aforementioned first, second, and third embodiments, the present disclosure is not limited to this. For example, alternatively, the linear-shaft driver 131 can include an air cylinder 131a as shown in a painting robot 130 according to a first modified embodiment of FIG. 8. The air cylinder 131a includes a cylinder tube and a piston, and the piston is linearly moved by air pressure. For example, the moving part 32 of the linear shaft 30 is connected to the piston, and the moving part 32 moves together with the piston moving. Because the air cylinder 131a has a relatively simple configuration, the configuration of the painting robot 10 can be prevented from becoming complicated by using the air cylinder 131a as a power source for the linear-shaft driver 131.

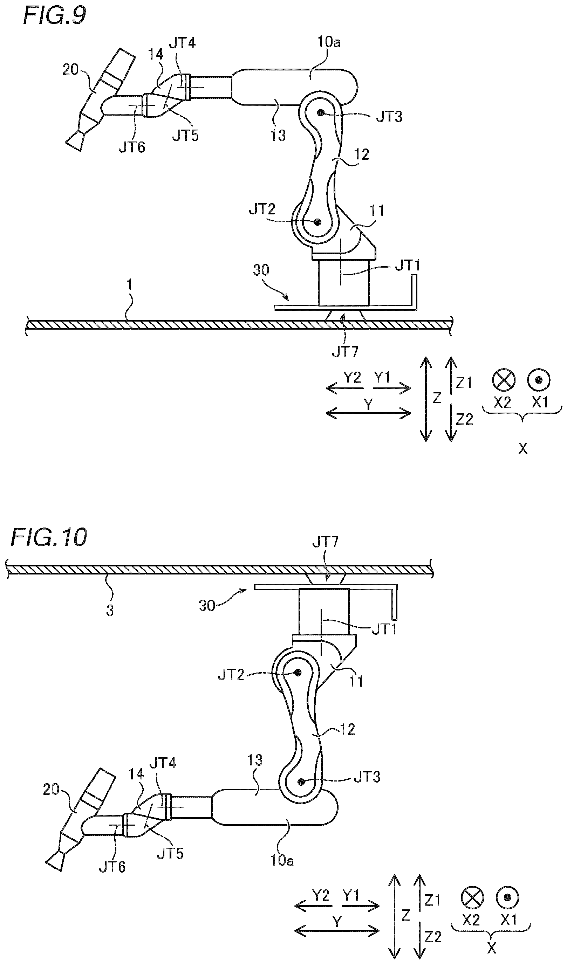

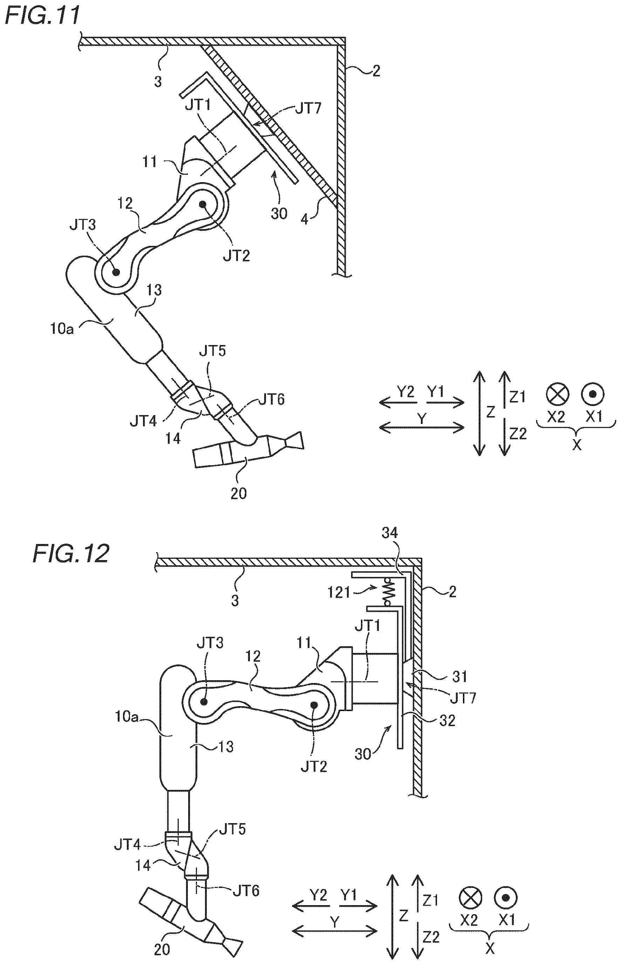

While the example in which the linear shaft 30 is arranged on the wall 2 has been shown in the aforementioned first, second, and third embodiments, the present disclosure is not limited to this. For example, alternatively, the linear shaft 30 can be arranged on the floor 1 as shown in a second modified embodiment of FIG. 9. In this arrangement, the robot arm 10a linearly moves along the floor 1. Also, the linear shaft 30 can be arranged on the ceiling surface 3 as shown in a third modified embodiment of FIG. 10. In this arrangement, the robot arm 10a linearly moves along the ceiling surface 3. In the arrangement in which the linear shaft 30 is arranged on the floor surface 1 or the ceiling surface 3, it is possible to increase the painting area in a horizontal direction relative to the workpiece 200. Although the linear shaft 30 moves the robot arm 10a in the Y direction in FIGS. 9 and 10, the linear shaft 30 can move the robot arm 10a in the X direction intersecting in the Y direction, for example. Also, the linear shaft 30 can be arranged on an inclined surface 4 intersecting the wall 2 as shown in a fourth modified embodiment shown in FIG. 11. In the embodiment shown in FIG. 11, the linear shaft 30 moves the robot arm 10a in a direction of intersecting the Z direction.

While the example in which the painting robot 10 includes six joints, which are JT1 joint to the JT6 joint, as rotating shafts has been shown in the aforementioned first, second, and third embodiments, the present disclosure is not limited to this. For example, alternatively, the painting robot 10 can have a number of joints other than six joints as the rotating shafts. For example, the painting robot 10 can include a JT8 joint as an extensible shaft provided to the proximal-end arm 12 or the distal-end arm 13. Accordingly, the painter 20 can be moved to a further position by extending the proximal-end arm 12 or the distal-end arm 13.

While the example in which the plurality of painting robots 10 are arranged between the workpieces 200 so as to paint the workpieces in the operation of painting the workpieces 200 has been shown in the aforementioned first, second, and third embodiments, the present disclosure is not limited to this. For example, alternatively, the painting robot 10 can paint the workpiece 200 arranged in front of the painting robot 10.

While the example in which the plurality of painting robots 10 paint the workpieces 200 aligned in the X direction has been shown in the aforementioned first, second, and third embodiments, the present disclosure is not limited to this. For example, alternatively, the plurality of painting robots 10 can paint a common workpiece 200.

While the example in which the interval W between the painting robots 10 is not greater than the distance L between the axis of the JT1 joint and the end of the range that can be reached by the painting robot 10 in a direction perpendicular to the axis of the JT1 joint has been shown in the aforementioned first, second, and third embodiments, the present disclosure is not limited to this. For example, alternatively, the distance W between the painting robots 10 can be greater than the distance L.

While the example in which the plurality of painting robots 10 are arranged on the wall 2 has been shown in the aforementioned first, second, and third embodiments, the present disclosure is not limited to this. For example, alternatively, only one painting robot 10 can be arranged on the wall 2.

While the example in which the workpieces 200 are the doors of the car 210 has been shown in the aforementioned first, second, and third embodiments, the present disclosure is not limited to this. For example, alternatively, the workpiece 200 can be a workpiece 200 other than the door of the car 210.

While the example in which the linear shaft 30 includes one axis shaft, which is the JT7 joint, has been shown in the aforementioned first, second, and third embodiments, the present disclosure is not limited to this. In the present disclosure, alternatively, the linear shaft 30 can include a plurality of shafts. For example, the linear shaft 30 can include two shafts, which are a shaft configured to move the robot arm 10a in the Z direction, and a shaft configured to move the robot arm 10a in the X direction.

While the example in which the spring 121 is arranged between the ceiling surface 3 and the linear shaft 30 has been shown in the aforementioned third embodiment, the present disclosure is not limited to this. For example, alternatively, as shown in a fifth modified embodiment of FIG. 12, an L-shaped plate element 34 having an L shape as viewed in the X direction can be arranged on the base 31 of the linear shaft 30, and a spring 121 can be coupled between the plate element 34 and the moving part 32. The plate element 34 includes a part extending in the Z direction, and a part extending in the Y direction.

### Modes

The aforementioned exemplary embodiment will be understood as concrete examples of the following modes by those skilled in the art.

### (Mode Item 1)

A painting robot according to mode item 1 includes a vertical multi-joint robot arm having a distal end part to which a painter is attached, and including a joint; a linear shaft connected to a proximal end part of the robot arm, and configured to linearly move the robot arm along a mount surface to which the robot arm is mounted; and a controller configured to interlock the joint of the robot arm and the linear shaft with each other in an operation of painting a workpiece.

### (Mode Item 2)

In the painting robot according to mode item 1, the controller is configured to move the painter at a constant speed with respect to the workpiece by interlocking the joint of the robot arm and the linear shaft with each other.

### (Mode Item 3)

In the painting robot according to mode item 1 or 2, the controller includes a robot controller commonly used for the joint and the linear shaft.

### (Mode Item 4)

In the painting robot according to any of mode items 1 to 3, a joint driver configured to drive the joint of the robot arm, and a linear-shaft driver configured to drive the linear shaft are further provided, wherein the robot arm includes an arm housing as an explosion-proof part, and the joint driver and the linear-shaft driver are accommodated in the arm housing.

### (Mode Item 5)

In the painting robot according to any of mode items 1 to 3, a joint driver configured to drive the joint of the robot arm, and a linear-shaft driver configured to drive the linear shaft are further provided, wherein the robot arm includes an arm housing as an explosion-proof part, the joint driver is accommodated in the arm housing, the linear shaft is mounted on a wall that separates an explosion-proof area in which explosion proof is required from a non-explosion-proof area in which explosion proof is not required, and the linear-shaft driver is arranged in the non-explosion-proof area.

### (Mode Item 6)

In the painting robot according to any of mode items 1 to 5, a/the linear-shaft driver configured to drive the linear shaft is further provided, wherein the linear-shaft driver includes an electric motor or an air cylinder.

### (Mode Item 7)

In the painting robot according to any of mode items 1 to 6, the linear shaft is arranged on a floor surface, on a/the wall perpendicular to the floor surface, or on a ceiling surface facing the floor surface.

### (Mode Item 8)

In the painting robot according to mode item 7, the linear shaft is arranged on the wall, and the painting robot further comprises a spring arranged between the ceiling surface and the linear shaft to cancel gravity applied to the linear shaft.

### (Mode Item 9)

In the painting robot according to any of mode items 1 to 8, the painting robot comprises a 7-axis vertical multi-joint painting robot including the robot arm includes six joints as the joint, and the linear shaft.

### (Mode Item 10)

In the painting robot according to any of mode items 1 to 9, a plurality of painting robots are arranged in a predetermined direction as the painting robot; and the linear shaft is configured to move the robot arm in a direction perpendicular to the predetermined direction.

### (Mode Item 11)

In the painting robot according to any of mode items 1 to 10, a plurality of workpieces are arranged in a/the predetermined direction; a/the plurality of painting robots are arranged in the predetermined direction; the proximal end part of the robot arm rotates about a predetermined axis; and a distance between the painting robots arranged adjacent to each other is not greater than a distance between the predetermined axis and an end of a movable range of each painting robot.

## Claims

1. A painting robot (10, 110, 120, 130) comprising:
a vertical multi-joint robot arm (10a) having a distal end part to which a painter (20) is attached, and including a joint (JT1, JT2, JT3, JT4, JT5, JT6) ;
a linear shaft (30) connected to a proximal end part of the robot arm, and configured to linearly move the robot arm along a mount surface (2) to which the robot arm is mounted; and
a controller (15) configured to interlock the joint of the robot arm and the linear shaft with each other in an operation of painting a workpiece (200).

2. The painting robot according to claim 1, wherein the controller is configured to move the painter at a constant speed with respect to the workpiece by interlocking the joint of the robot arm and the linear shaft with each other.

3. The painting robot according to claim 1 or 2, wherein the controller includes a robot controller (15) commonly used for the joint and the linear shaft.

4. The painting robot according to any of claims 1 to 3 further comprising
a joint driver (16) configured to drive the joint of the robot arm, and
a linear-shaft driver (33, 131) configured to drive the linear shaft, wherein
the robot arm includes an arm housing (10b) as an explosion-proof part, and
the joint driver and the linear-shaft driver are accommodated in the arm housing.

5. The painting robot according to any of claims 1 to 3 further comprising
a joint driver (16) configured to drive the joint of the robot arm, and
a linear-shaft driver (33, 131) configured to drive the linear shaft, wherein
the robot arm includes an arm housing (10b) as an explosion-proof part,
the joint driver is accommodated in the arm housing,
the linear shaft is mounted on a wall that separates an explosion-proof area (A1) in which explosion proof is required from a non-explosion-proof area (A2) in which explosion proof is not required, and
the linear-shaft driver is arranged in the non-explosion-proof area.

6. The painting robot according to any of claims 1 to 5 further comprising a/the linear-shaft driver (33, 131) configured to drive the linear shaft, wherein
the linear-shaft driver includes an electric motor (33a) or an air cylinder (131a).

7. The painting robot according to any of claims 1 to 6, wherein the linear shaft is arranged on a floor surface (1), on a/the wall perpendicular to the floor surface (2), or on a ceiling surface (3) facing the floor surface.

8. The painting robot according to claim 7, wherein
the linear shaft is arranged on the wall; and
the painting robot further comprises a spring (121) arranged between the ceiling surface and the linear shaft to cancel gravity applied to the linear shaft.

9. The painting robot according to any of claims 1 to 8, wherein the painting robot comprises a 7-axis vertical multi-joint painting robot including the robot arm includes six joints as the joint, and the linear shaft.

10. The painting robot according to any of claims 1 to 9, wherein
a plurality of painting robots are arranged in a predetermined direction (X direction) as the painting robot; and
the linear shaft is configured to move the robot arm in a direction perpendicular to the predetermined direction.

11. The painting robot according to any of claims 1 to 10, wherein
a plurality of workpieces are arranged in a/the predetermined direction (X direction);
a/the plurality of painting robots are arranged in the predetermined direction as the painting robot;
the proximal end part of the robot arm rotates about a predetermined axis (joint JT1 axis); and
a distance between the painting robots arranged adjacent to each other is not greater than a distance between the predetermined axis and an end of a movable range of each painting robot.
